# FASCICULE DE BREVET EUROPEEN

(11) **EP 2 199 201 B1**
(45) Date de publication et mention de la délivrance du brevet: **13.02.2013**
(21) Numéro de dépôt: 09290912.6
(22) Date de dépôt: 07.12.2009
(51) Int. Cl.: B64C 25/24, B64C 13/50, H02J 4/00

(54) **Architecture de distribution de puissance pour distrubuer la puissance à des actionneurs électromécaniques d'un aéronef**
Leistungsverteilungsaufbau zur Verteilung der Leistung an die elektromechanischen Stellglieder eines Luftfahrzeugs
Power-distribution architecture for distributing power to electromechanical actuators of an aircraft

(30) Priorité: 22.12.2008 FR 0807336
(43) Date de publication de la demande: 23.06.2010
(73) Titulaire: Messier-Bugatti-Dowty, 78140 Velizy Villacoublay (FR)
(72) Inventeur: Nierlich, Florent, 92250 La Garenne-Colombes (FR); Leynaert, François-Noël, 95160 Montmorency (FR)
(74) Mandataire: Parzy, Benjamin Alain

(56) Documents cités:
- EP-A- 1 099 630
- EP-A- 1 834 874
- EP-A- 1 852 347
- EP-A- 1 926 194
- EP-A- 2 001 104
- WO-A-2007/068451
- FR-A1- 2 882 097

## Description

L'invention est relative à une architecture de distribution de puissance pour distribuer la puissance à des actionneurs électromécaniques, et électrohydrostatiques d'un aéronef, et plus généralement des actionneurs électriques.

### ARRIERE-PLAN TECHNOLOGIQUE DE L'INVENTION

Il est connu du document EP 1 834 874 une architecture de distribution de puissance à des actionneurs électromécaniques d'aéronefs tels que des actionneurs de manoeuvre des atterrisseurs, des portes et crochets associés, des actionneurs de manoeuvre des dispositifs aérodynamiques tels que des volets ou des becs de bords d'attaque.

Ce document préconise l'utilisation d'organes de distribution de puissance pour alimenter des actionneurs physiquement regroupés, de criticité similaire, de puissance voisine, et travaillant en séquence. Les organes de distribution de puissance comportent essentiellement un onduleur associé à un organe de commutation permettant d'envoyer la puissance calibrée par l'onduleur vers l'actionneur concerné. L'organe de distribution de puissance est alimenté directement par l'un des réseaux de puissance de l'aéronef.

En outre, il est connu document EP 1 099 630, qui est considéré comme l'art antérieur le plus proche et décrit les caractéristiques du préambule de la revendication 1.

### OBJET DE L'INVENTION

L'invention a pour but de faire évoluer cette architecture, notamment en améliorant la sécurité des opérateurs de maintenance amenés à intervenir sur les actionneurs, et en diminuant les pertes dans les onduleurs.

### BREVE DESCRIPTION DE L'INVENTION

En vue de la réalisation de ce but, on propose une architecture de distribution de puissance pour alimenter des actionneurs électromécaniques d'aéronefs l'architecture comportant au moins un organe de distribution de puissance pour distribuer la puissance à tel ou tel actionneur électromécanique, l'architecture recevant la puissance d'au moins un bus de puissance électrique de l'aéronef. Selon l'invention, il est interposé entre le bus de puissance électrique de l'aéronef et l'organe de distribution de puissance un réseau à tension continue variable de façon commandée.

Ainsi, l'organe de distribution de puissance ne reçoit plus directement la puissance du ou des bus de puissance de l'aéronef, mais d'un réseau à tension continue qui peut être ajustée aux différentes circonstances de fonctionnement des actionneurs.

En particulier, lorsque l'aéronef est au parking tout en restant sous tension, il est possible, en cas de nécessité d'intervention du personnel de maintenance, de réduire la tension régnant dans le réseau à tension continue sous un niveau ne mettant pas en danger l'opérateur de maintenance, en cas de court-circuit accidentel.

En outre, si l'organe de distribution de puissance est équipé d'un onduleur, la régulation de la tension du réseau permettra de limiter les pertes de l'onduleur. De plus, pour chacun des actionneurs, il sera possible d'ajuster la tension délivrée à l'onduleur, de sorte que l'on peut envisager d'alimenter par la même architecture, des actionneurs fonctionnant sous faible tension et des actionneurs nécessitant au contraire des hautes tensions.

De plus, la valeur de la tension dans le réseau à tension continue pourra être adaptée à l'impédance de la ligne distribuant la puissance à l'actionneur alimenté, ce qui permet de fournir à chaque actionneur une tension suffisante, quelle que soit la chute de tension dans la ligne.

Enfin, la valeur de la tension pourra être adaptée pour contrôler la puissance fournie aux actionneurs, ou la puissance remontant des actionneurs et fournie aux bus de puissance de l'aéronef.

### BREVE DESCRIPTION DES FIGURES

L'invention sera mieux comprise à la lecture de la description qui suit des figures des dessins annexés, parmi lesquelles :

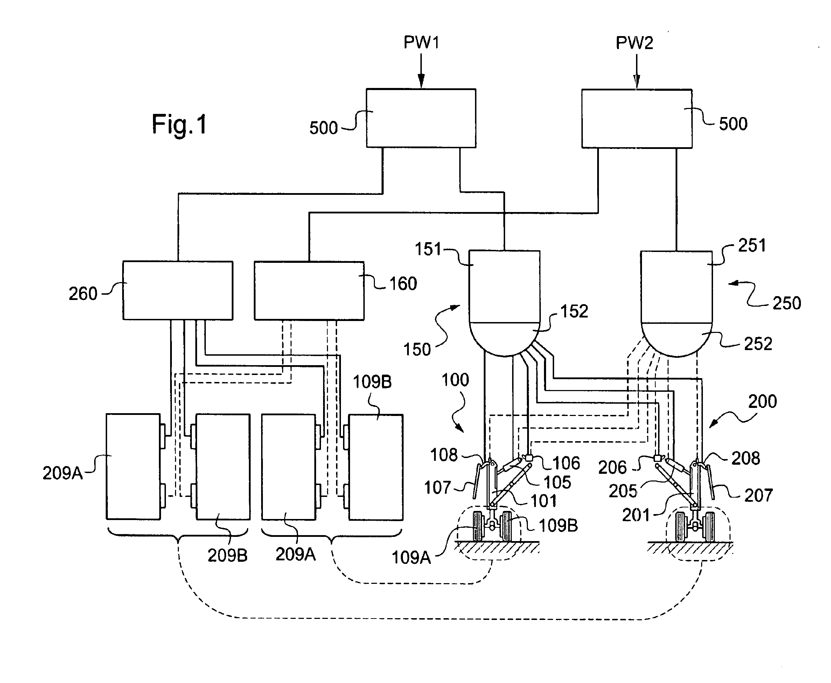

- la figure 1 est une vue schématique d'une architecture de distribution de puissance intégrant un réseau local à tension continue commandable selon l'invention;
- la figure 2 est une vue schématique illustrant plus en détail le réseau de tension continue de la figure 1.

### DESCRIPTION DETAILLEE DE L'INVENTION

L'architecture illustrée ici est une architecture de distribution de puissance à des actionneurs liés aux atterrisseurs de l'aéronef, bien que cela ne soit aucunement limitatif.

Ici, seuls sont représentés les atterrisseurs principaux gauche 100, et droit 200 de l'aéronef. Ceux-ci comportent :
- les atterrisseurs 101, 201 proprement dits, articulés à la structure de l'aéronef ;
- des actionneurs électromécaniques de relevage 105, 205 ;
- des crochets électromécaniques de verrouillage 106, 206 des atterrisseurs en position stockée ;
- des actionneurs électromécaniques 108, 208 de portes de fermeture des soutes de stockage des atterrisseurs.

En outre, les atterrisseurs portent ici chacun deux roues 109A, 109B ; 209A, 209B équipées chacune de quatre actionneurs électromécaniques de freinage 110A, 110B, 210A, 210B.

Selon une disposition connue, notamment du document EP 1 834 874, les actionneurs électromécaniques sont alimentés par des organes de distribution de puissance. En l'occurrence, les actionneurs liés aux atterrisseurs 100,200 sont alimentés par deux organes de distribution de puissance 150, 250. Ces organes de distribution de puissance comportent un onduleur 151,251 associé à un commutateur 152, 252 permettant d'envoyer la puissance à l'un ou l'autre des actionneurs concernés.

De même, les actionneurs de freins sont alimentés par des organes de distribution de puissance particuliers, en l'occurrence des contrôleurs de frein 160, 260 alimentant chacun deux actionneurs de frein par roue. Les contrôleurs de frein 160, 260 comprennent essentiellement des onduleurs commandés en fonction de consignes de freinage générés par une unité de freinage, non représentée ici.

Les organes de distribution de puissance 150, 250, et les contrôleurs de frein 160,260 reçoivent de la puissance électrique respectivement de deux bus d'alimentation PW1 et PW2, ici en l'occurrence des bus d'alimentation en courant alternatif triphasé, à haute tension.

Selon l'invention, des réseaux locaux à tension continue commandable 500 sont interposés entre les bus d'alimentation de l'aéronef et les organes de distribution de puissance. Plus précisément, chacun des réseaux locaux à tension continue 500 est alimentées par l'un des bus d'alimentation PW1, PW2 de l'aéronef, et est associé à l'un des organes distributeurs de puissance 150, 250 et l'un des contrôleurs de frein 160, 260.

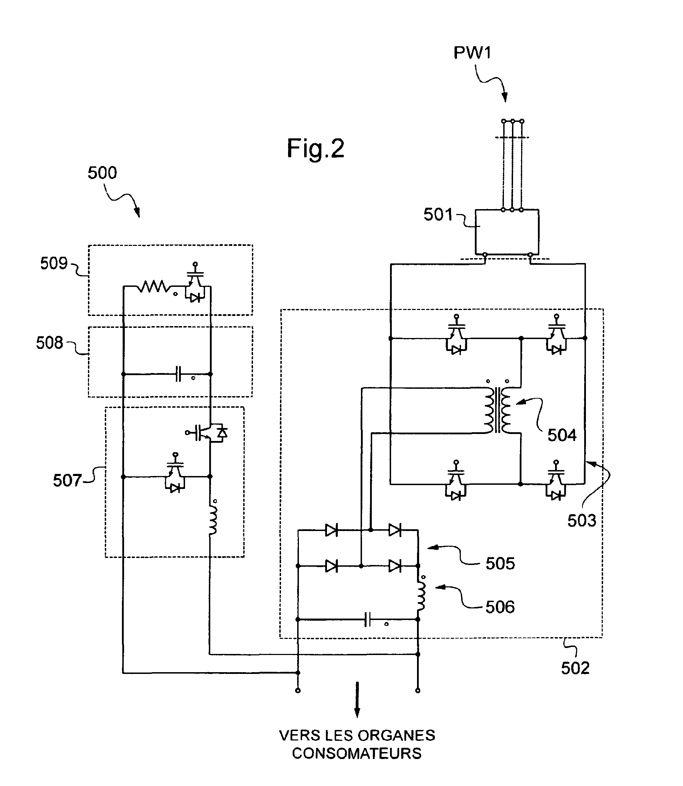

L'un des réseaux à tension continue commandable 500 est détaillé à la figure 2. Sur cette figure,

Le bus d'alimentation PW1 (ici un réseau alternatif triphasé) est tout d'abord connecté à un convertisseur alternatif/continu 501 pour convertir la tension alternative en une tension continue. Ensuite, la tension continue est fournie à un étage de régulation 502, délimité par des pointillés sur la figure 2. L'étage de régulation hacheur 503 constitué ici d'un pont de transistors commandés, dont la sortie est associée à un transformateur 504 permettant d'assurer un isolement galvanique entre le bus d'alimentation de l'aéronef PW1 et le reste de l'architecture de distribution de puissance. Le hacheur permet d'ajuster le niveau de la tension continue qui sera délivrée en sortie par le réseau 500. La tension hachée délivrée en sortie du transformateur 504 est lissée de façon connue en soi par un filtre de lissage LC 506. La sortie du filtre est alors connectée aux organes consommateurs, en l'occurrence les organes de distribution de puissance 150, 250, et les contrôleurs de frein 160,260.

Les avantages procurés par l'invention sont nombreux :
- la présence d'un réseau à tension continue commandable intercalé entre les bus d'alimentation de l'aéronef et les actionneurs permet de descendre vers ces actionneurs des câbles uniquement soumis à de la tension continue, et donc moins susceptibles de rayonner, ce qui contribue à diminuer les émissions électromagnétiques et permet donc de diminuer la masse du blindage de ces câbles ;
- la possibilité de réglage de la tension continue permet de diminuer arbitrairement la tension à un niveau ne présentant pas de risques pour les opérateurs de maintenance susceptibles d'intervenir sur les actionneurs. Ainsi, bien que les actionneurs puissent être alimentés en haute tension lors de leur opération, les opérateurs ne risquent pas d'être exposés à cette haute tension pendant les opérations de maintenance ;
- la présence d'un réseau à tension continue commandable est particulièrement favorable dans l'architecture illustrée ici pour laquelle les actionneurs connectés travaillent en séquence, et jamais simultanément (sauf bien sûr, les actionneurs de freinage qui travaillent de concert, mais jamais en même temps que les actionneurs de relevage, les actionneurs de porte, ou les crochets de verrouillage). Ainsi, il est possible de délivrer à l'organe de distribution de puissance ou au contrôleur de frein concerné une tension parfaitement adaptée au besoin de puissance et de contrôle de l'actionneur à alimenter, ce qui contribue à diminuer les pertes dans les onduleurs, et à diminuer la demande de puissance adressée au bus d'alimentation de l'aéronef au strict nécessaire ;

En particulier, il sera possible de tenir compte de l'impédance de la ligne d'alimentation de l'actionneur concerné, et d'ajuster la tension du réseau à tension continue pour que l'organe de distribution de puissance ou le contrôleur de frein reçoive une tension compensée de la chute de tension inévitable le long de ligne.

On remarquera que chacun des organes de distribution de puissance 150,250 alimente l'intégralité des actionneurs, de sorte qu'en cas de défaillance de l'un des organes de distribution puissance, il reste possible d'alimenter tous les actionneurs à l'aide de l'autre organe de distribution de puissance.

Par contre, chacun des contrôleurs de frein 160,260 n'alimente que la moitié des actionneurs de freins sur chacun des roues. La perte de l'un des contrôleurs conduit à la perte de la moitié des actionneurs de freins. Cette perte est au moins partiellement compensable en augmentant la tension du réseau à tension continue associé de sorte que les actionneurs alimentés reçoivent temporairement une puissance plus importante que la puissance nominale.

Selon un aspect particulier de l'invention, le réseau à tension continue ainsi intercalé comprend une dérivation permettant de récupérer la puissance en provenance des actionneurs sans la faire remonter vers le bus d'alimentation de l'aéronef. A cet effet, on remarquera qu'un pont de diodes 505 est disposé avant le filtre LC 506, empêchant la puissance provenant des actionneurs de remonter vers le bus d'alimentation de puissance PW1 de l'aéronef. Cette puissance est ainsi dirigée vers un convertisseur continu/continu 507, délimité par des pointillés, pour calibrer la tension de la puissance ainsi récupérée. Cette puissance à tension calibrée est ici stockée dans un organe de stockage 508, en l'occurrence une capacité. Un organe de dissipation 509 est attelé à l'organe de stockage pour dissiper le trop-plein de puissance remontant des actionneurs.

En variante, plutôt que de dissiper cette puissance, on pourra réinjecter la puissance dans le bus d'alimentation de l'aéronef, pour la rendre disponible pour d'autres consommateurs de l'aéronef. On pourra également réinjecter cette puissance vers les actionneurs connectés au réseau à tension continue, ce qui diminue la demande de puissance adressée au bus d'alimentation de l'aéronef.

L'invention n'est pas limitée à ce qui vient d'être décrit, mais englobe au contraire toute variante entrant dans le cadre défini par les revendications.

En particulier, bien qu'adaptée à l'alimentation d'actionneurs liés aux atterrisseurs, on pourra dans le cadre de l'invention prévoir une architecture de distribution qui alimente d'autres actionneurs associés à des éléments mobiles, tels que des actionneurs de dispositifs hypersustentateurs, de portes de soute...

Bien que l'on ait illustré une architecture de puissance à deux réseaux à tension continue dans laquelle chaque réseau à tension continue est associé à un bus d'alimentation alternatif de l'aéronef, on pourra associer un réseau à tension continue à plusieurs bus d'alimentation, ou à d'autres sources d'alimentation, comme par exemple des batteries.

## Revendications

1. Architecture de distribution de puissance pour aéronef, destinée à alimenter des actionneurs électromécaniques (105, 106, 108 ; 205, 206, 208 ; 109A, 109B, 209A, 209B) d'aéronefs, l'architecture comportant au moins un organe de distribution de puissance (150, 250, 160, 260) pour distribuer la puissance à tel ou tel actionneur électromécanique relié à l'architecture, l'architecture recevant la puissance d'au moins un bus d'alimentation en puissance (PW1, PW2) de l'aéronef, **caractérisée en ce qu'**un réseau à tension continue variable de façon commandée (500) est interposé entre le bus d'alimentation en puissance de l'aéronef et les organes de distribution de puissance.

2. Architecture de distribution de puissance selon la revendication 1, dans lequel le réseau à tension continue (500) comporte des moyens de dérivation (507, 508, 509) d'une puissance en provenance des actionneurs, empêchant cette puissance de remonter vers le bus d'alimentation de l'aéronef.

3. Architecture de distribution de puissance selon la revendication 2, dans lequel les moyens de dérivation comportent des moyens de stockage (508) de la puissance ainsi dérivée.

4. Architecture de distribution de puissance selon la revendication 1, dans lequel le réseau à tension continue (500) comporte des moyens d'isolation galvanique (504) isolant le bus d'alimentation de l'aéronef des actionneurs alimentés.

## Claims

1. A power distribution architecture for an aircraft for powering aircraft electromechanical actuators (105, 106, 108; 205, 206, 208; 109A, 109B, 209A, 209B), the architecture comprising at least one power distribution member (150, 250, 160, 260) for distributing power to such and such an electromechanical actuator connected to the architecture, the architecture receiving power from at least one power supply bus (PW1, PW2) of the aircraft, the architecture being **characterized in that** a DC network (500) of voltage that is variable in controlled manner is interposed between the power supply bus of the aircraft and the power distribution members.

2. A power distribution architecture according to claim 1, wherein the DC network (500) includes branch connection means (507, 508, 509) for taking off power coming from the actuators, and preventing said power from returning to the power supply bus of the aircraft.

3. A power distribution architecture according to claim 2, wherein the branch connection means include means (508) for storing the power as taken off in this way.

4. A power distribution architecture according to claim 1, wherein the DC voltage network (500) includes electrical isolation means (504) isolating the power supply bus of the aircraft from the powered actuators.

## Patentansprüche

1. Anordnung zur Leistungsverteilung bei einem Luftfahrzeugs, die dazu bestimmt ist, die elektromechanischen Stellglieder (105, 106, 108; 205, 206, 208; 109A, 109B, 209A, 209B) des Luftfahrzeugs zu speisen, wobei die Anordnung mindestens ein Leistungsverteilungsorgan (150, 250, 160, 260) zum Verteilen der Leistung an das eine oder andere elektromechanische Stellglied umfasst, das mit der Anordnung verbunden ist, und wobei die Anordnung die Leistung mindestens eines Leistungsbusses (PW1, PW2) des Luftfahrzeugs erhält, **dadurch gekennzeichnet, dass** zwischen den Leistungsbus des Luftfahrzeugs und die Organe zur Leistungsverteilung ein Gleichspannungsnetz (500) mit variabler gesteuerter Spannung geschaltet ist.

2. Aufbau zur Leistungsverteilung nach Anspruch 1, bei dem das Gleichspannungsnetz (500) Ableitungsmittel (507, 508, 509) zum Ableiten einer aus den Stellgliedern kommenden Leistung umfasst, die diese Leistung daran hindern, in Richtung des Leistungsbusses des Luftfahrzeugs zurückzufließen.

3. Aufbau zur Leistungsverteilung nach Anspruch 2, bei dem die Ableitungsmittel Speichermittel (508) für die so abgeleitete Leistung umfassen.

4. Aufbau zur Leistungsverteilung nach Anspruch 1, bei dem das Gleichspannungsnetz (500) galvanische Isolierungsmittel (504) zum Isolieren des Leistungsbusses des Luftfahrzeugs gegenüber den gespeisten Stellgliedern umfasst.
